# DEMANDE DE BREVET EUROPEEN

(11) **EP 2 375 186 A1**
(43) Date de publication de la demande: **12.10.2011**
(21) Numéro de dépôt: 11160787.5
(22) Date de dépôt: 01.04.2011
(51) Int. Cl.: F24J 2/52, F24J 2/54, F24J 2/38, H01L 31/045

(54) **Dispositif de poursuite du soleil, destiné notamment à équiper une construction**

(30) Priorité: 09.04.2010 FR 1052727
(71) Demandeur: Sol in G, 72190 Saint-Pavace (FR)
(72) Inventeur: Bonnin, Maxime, 72000, Le Mans (FR); Nizou, Sylvain, 37210, Noizay (FR); Josse, Gérard, 72400, La Ferté Bernard (FR)
(74) Mandataire: Godineau, Valérie

(57) **Abrégé**

Dispositif de poursuite du soleil, du type comprenant au moins deux panneaux (1), une structure (2) support à laquelle lesdits panneaux (1) sont couplés et des moyens d'entraînement en déplacement en synchronisme desdits panneaux (1) pour le passage desdits panneaux (1) d'une configuration coplanaire dans laquelle lesdits panneaux (1) sont disposés dans un même plan de référence, à une configuration inclinée, chaque panneau (1) étant, pour le passage d'une configuration à une autre, équipé de moyens (3) de liaison à pivotement à la structure (2) support.

Lesdits panneaux (1) sont en outre, à l'état couplé à la structure support, montés mobiles par rapport à ladite structure (2) support suivant une direction (D) orthogonale à l'axe de pivotement, desdits panneaux (1) et parallèle au plan de référence, dans le sens d'un rapprochement ou d'un écartement desdits panneaux (1) entre eux pour le passage desdits panneaux (1) d'une position rapprochée en configuration coplanaire à une position écartée en configuration inclinée.

## Description

La présente invention concerne un dispositif de poursuite du soleil, destiné notamment à équiper une construction.

Elle concerne plus particulièrement un dispositif de poursuite du soleil du type comprenant au moins deux panneaux, de préférence solaires, une structure support à laquelle lesdits panneaux sont couplés et des moyens d'entraînement en déplacement en synchronisme desdits panneaux pour le passage desdits panneaux d'une configuration coplanaire dans laquelle lesdits panneaux sont disposés côte à côte dans un même plan, dit plan de référence, à une configuration inclinée par rapport audit plan de référence, dans laquelle lesdits panneaux s'étendent, de préférence, de manière parallèle entre eux, chaque panneau étant, pour le passage d'une configuration à une autre, équipé de moyens de liaison à la structure support, pour un montage à pivotement autour d'un axe, dit axe Nord-Sud, lesdits axes de pivotement desdits panneaux étant parallèles entre eux d'un panneau à un autre.

De tels dispositifs de poursuite du soleil à fonction de dispositif de production d'énergie, de brise-vue, de pare-soleil ou autres sont bien connus à ceux versés dans cet art. Généralement, un tel dispositif comporte une pluralité de panneaux organisés en au moins une rangée de panneaux. Des moyens d'entraînement en déplacement en synchronisme des panneaux de la rangée de panneaux permettent de faire tourner ou basculer les panneaux de ladite rangée pour les maintenir aussi perpendiculaires que possible au soleil. Habituellement, les panneaux d'une rangée sont agencés pour que leur axe de pivotement soit disposé dans une direction Nord-Sud et les moyens d'entraînement en déplacement en synchronisme des panneaux entraînent un déplacement progressif des panneaux pendant la journée d'une direction orientée vers l'Est au matin à une direction orientée vers l'Ouest dans l'après-midi. Les panneaux de ladite rangée sont ramenés dans la direction orientée vers l'Est pour le jour suivant.

Dans une telle solution, il est nécessaire de maintenir les panneaux écartés l'un de l'autre d'une distance suffisante pour éviter que l'ombre portée d'un panneau vienne masquer au moins partiellement la surface d'un panneau adjacent, en particulier dans le cas de panneaux solaires ou photovoltaïques. Il en résulte un encombrement important de l'ensemble.

Un but de la présente invention est donc de proposer un dispositif de poursuite du soleil du type précité dont la conception permet d'une part une compacité accrue, c'est-à-dire un encombrement réduit du dispositif de poursuite en position coplanaire desdits panneaux sans nuire au fonctionnement de l'ensemble, d'autre part un ombrage permanent au moins de la zone couverte par les panneaux en position coplanaire.

Un autre but de la présente invention est de proposer un dispositif de poursuite du soleil du type précité dont la conception permet, parallèlement à une gestion optimale des ombres portées desdits panneaux, un entraînement en déplacement des panneaux à l'aide de moyens d'actionnement de conception simplifiée.

A cet effet, l'invention a pour objet un dispositif de poursuite du soleil, destiné notamment à équiper une construction, le dispositif de poursuite du soleil comprenant au moins deux panneaux, de préférence solaires, une structure support à laquelle lesdits panneaux sont couplés et des moyens d'entraînement en déplacement en synchronisme desdits panneaux pour le passage desdits panneaux d'une configuration coplanaire dans laquelle lesdits panneaux sont disposés côte à côte dans un même plan, dit plan de référence, à une configuration inclinée par rapport audit plan de référence, dans laquelle lesdits panneaux s'étendent, de préférence, de manière parallèle entre eux, chaque panneau étant, pour le passage d'une configuration à une autre, équipé de moyens de liaison à la structure support, pour un montage à pivotement autour d'un axe, dit axe nord sud, lesdits axes de pivotement desdits panneaux étant parallèles entre eux d'un panneau à un autre, caractérisé en ce que lesdits panneaux sont en outre, à l'état couplé à la structure support, montés mobiles par rapport à ladite structure support suivant une direction orthogonale à l'axe de pivotement, dit axe Nord-Sud, des panneaux, parallèle au plan de référence, dans le sens d'un rapprochement ou d'un écartement desdits panneaux entre eux pour le passage desdits panneaux entre une position rapprochée en configuration coplanaire et une position écartée en configuration inclinée.

Grâce au fait que les panneaux montés mobiles à rotation par rapport à la structure support autour d'un axe appelé axe Nord-Sud sont, en parallèle, montés mobiles, en particulier en translation par rapport à la structure support, suivant une direction, ou le long d'un axe parallèle au plan de référence et transversal, de préférence orthogonal, à l'axe de pivotement desdits panneaux, lesdits panneaux sont susceptibles, parallèlement à leur déplacement à pivotement, d'être déplacés dans le sens d'un rapprochement ou d'un écartement lors du passage d'une configuration coplanaire à une configuration inclinée pour permettre une gestion optimale des ombres portées desdits panneaux. Ainsi, les panneaux sont déplacés dans le sens d'un rapprochement lors du passage de la configuration inclinée à la configuration coplanaire pour être rapprochés en configuration coplanaire et écartés en configuration inclinée de sorte que l'ombre de l'un des panneaux n'atteint pas le panneau adjacent.

De préférence, les panneaux et les moyens de liaison à pivotement desdits panneaux à la structure support forment un ensemble monté à coulissement le long de la structure support suivant une direction parallèle au plan de référence et transversale, de préférence orthogonale, à l'axe de rotation ou de pivotement desdits panneaux. Ce mouvement combiné de déplacement à rotation et en translation des panneaux par rapport à la structure support obtenu par lesdits moyens d'entraînement en déplacement en synchronisme desdits panneaux permet l'obtention d'un encombrement réduit de la succession de panneaux en configuration coplanaire et une conception et une architecture simplifiées de la structure support.

De préférence, les moyens de liaison pour un montage à pivotement entre panneau et structure support comprennent au moins un pilier raccordé par l'une de ses extrémités à la structure support et équipé à, ou au voisinage de, son extrémité opposée, d'un pivot interposé entre panneau et pilier, lesdits piliers portés par la structure support s'étendant, de préférence, sensiblement parallèles entre eux et les axes de pivotement de la liaison pivot panneau/pilier étant disposés, de manière sensiblement parallèle, d'un pilier à un autre.

Généralement, pour un montage desdits panneaux dans le sens d'un rapprochement ou d'un écartement desdits panneaux entre eux, lesdits piliers sont en outre, dans leur zone de raccordement à la structure support reliés à ladite structure support par une liaison à coulissement le long de ladite structure support.

De préférence, les moyens d'entraînement en déplacement en synchronisme desdits panneaux comprennent un organe, tel qu'un cadre, d'entraînement en déplacement des panneaux, ledit organe d'entraînement en déplacement des panneaux étant monté mobile, par rapport à la structure support, dans le sens d'un rapprochement ou d'un écartement de ladite structure support, par l'intermédiaire d'au moins un actionneur, tel qu'un vérin, ledit organe d'entraînement en déplacement des panneaux, auquel lesdits panneaux sont couplés par une liaison à pivot glissant d'axe de pivotement parallèle à l'axe de pivotement des moyens de liaison à pivotement des panneaux à la structure support, étant en outre couplé auxdits panneaux par un jeu de biellettes à fonction d'écarteur.

Grâce à cette disposition, il est possible à l'aide d'un même organe d'entraînement en déplacement des panneaux et d'un nombre d'actionneurs réduit, d'entraîner simultanément en déplacement une pluralité de panneaux ou de rangées de panneaux.

De préférence encore, le dispositif est équipé d'une structure de liaison pour le raccordement de la structure support à la construction à équiper, ladite structure support étant reliée à la structure de liaison par une liaison pivot d'axe pivot transversal, de préférence orthogonal, à l'axe pivot dit axe Nord-Sud des moyens de liaison à pivotement desdits panneaux à la structure support.

Ainsi, les panneaux peuvent, en sus de leur déplacement suivant la direction Est-Ouest, se déplacer en élévation pour suivre les positions relatives du soleil et de la terre en fonction des saisons notamment.

L'invention sera bien comprise à la lecture de la description suivante d'exemples de réalisation, en référence aux dessins annexés dans lesquels :

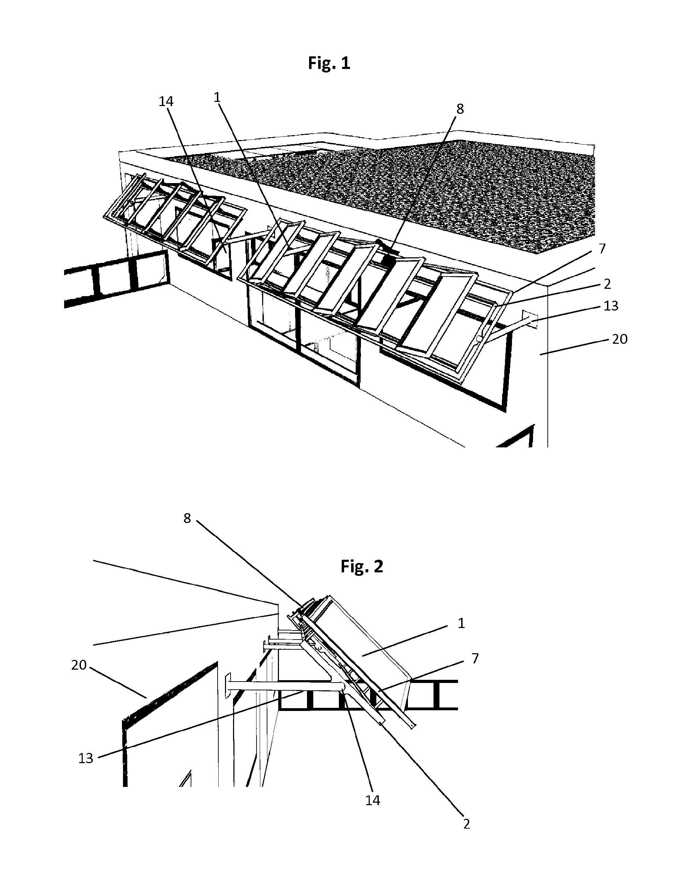

la figure 1 représente une vue en perspective d'un dispositif de poursuite conforme à l'invention en configuration inclinée desdits panneaux ;
la figure 2 représente une vue de côté du dispositif de poursuite de la figure 1 ;
la figure 3 représente une vue en perspective d'une rangée de panneaux en configuration inclinée avec une orientation vers le bord vertical de gauche de la page ou vers l'Ouest desdits panneaux ;
la figure 4 représente une vue en perspective d'une rangée de panneaux en configuration coplanaire ;
la figure 5 représente une vue en perspective d'une rangée de panneaux en configuration inclinée avec une orientation vers le bord vertical de droite de la page ou vers l'Est desdits panneaux ;

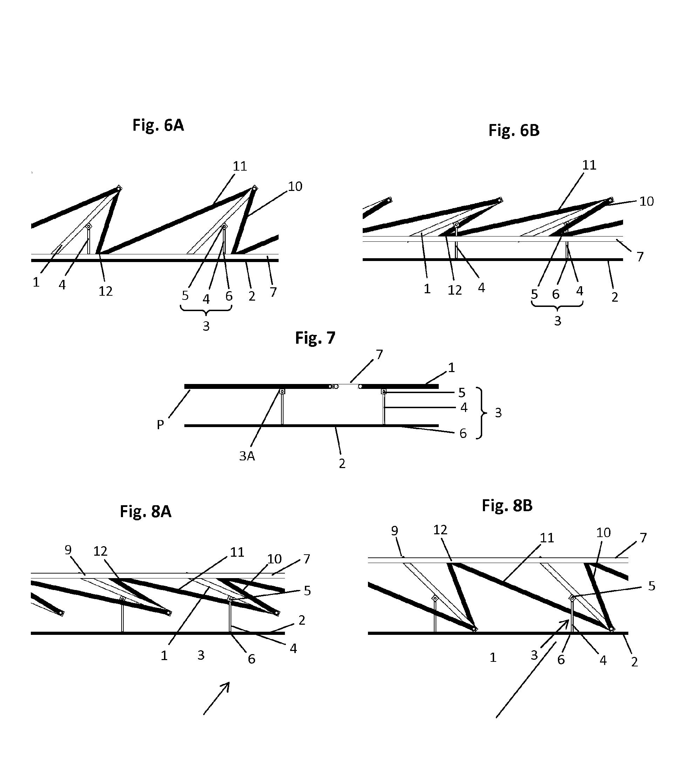

les figures 6A et 6B représentent des vues partielles en coupe de la configuration inclinée de la figure 3 avec une inclinaison variable desdits panneaux ;
la figure 7 représente une vue partielle en coupe de la configuration coplanaire de la figure 4 ;
les figures 8A et 8B représentent des vues partielles en coupe de la configuration inclinée de la figure 5 avec une inclinaison variable desdits panneaux,

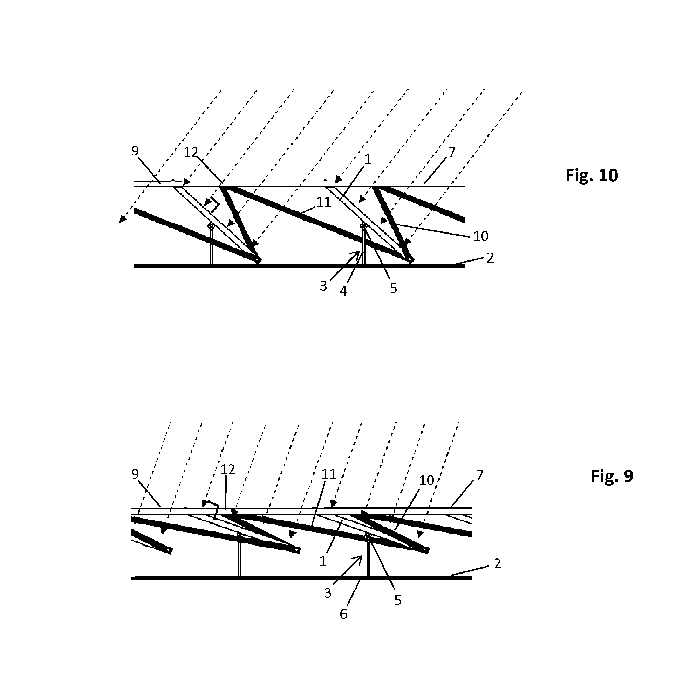

les figures 9 et 10 représentent des vues similaires aux figures 8A et 8B, les rayonnements solaires ayant été représentés en sus en pointillés.

Comme mentionné ci-dessus, le dispositif de poursuite du soleil, objet de l'invention, est destiné à être installé sur une construction, en particulier en façade ou sur le toit de ladite construction 20. Ce dispositif comprend au moins deux panneaux 1, de préférence solaires, une structure 2 support à laquelle lesdits panneaux 1 sont couplés et des moyens d'entraînement en déplacement en synchronisme desdits panneaux 1 pour le passage desdits panneaux 1 d'une configuration coplanaire dans laquelle lesdits panneaux 1 sont disposés côte à côte dans un même plan, dit plan P de référence, à une configuration inclinée par rapport audit plan P de référence, dans laquelle lesdits panneaux 1 forment un angle avec ledit plan P de référence et s'étendent, de préférence, de manière parallèle entre eux. Bien que les panneaux soient de préférence des panneaux photovoltaïques, ces panneaux peuvent, de manière équivalente, être réalisés sous forme de panneaux réflecteurs, tels que des miroirs, d'écrans végétaux, de panneaux solaires, de chauffage, d'isolant phonique et/ou thermique, etc. Les panneaux 1 sont ici représentés sous forme quadrangulaire, mais ils peuvent être de forme quelconque et être réalisés plans, convexes ou concaves, sans sortir du cadre de l'invention. Chaque panneau 1 peut être formé d'un élément unique ou d'une succession d'éléments disposés côte à côte et formant une rangée d'éléments.

Le dispositif de poursuite du soleil qui comporte généralement une pluralité de panneaux 1 peut présenter des panneaux organisés en une rangée de panneaux ou en une pluralité de rangées de panneaux couplées éventuellement à une structure 2 support commune et équipées de moyens d'entraînement en déplacement en synchronisme des panneaux communs à l'ensemble desdites rangées de panneaux.

De manière habituelle, chaque panneau d'une rangée ou une ligne de panneaux est, pour le passage d'une configuration coplanaire, dans laquelle lesdits panneaux 1 sont disposés côte à côte, à une configuration inclinée monté mobile par rapport à ladite structure 2 support à rotation ou à pivotement autour d'un axe appelé par souci de simplicité axe Nord-Sud et représenté en 3A aux figures. En effet, généralement et comme mentionné ci-dessus pour les dispositifs de l'état de la technique, les panneaux sont généralement agencés pour que leur axe de pivotement soit disposé dans une direction Nord-Sud de sorte que les panneaux suivent progressivement pendant la journée une direction orientée vers l'Est au matin et une direction orientée vers l'Ouest dans l'après-midi. Bien que ce cas soit préféré, cette configuration n'est en aucun cas obligatoire. Une autre orientation des axes pivot peut être retenue.

Pour ce montage à pivotement par rapport à ladite structure support 2, chaque panneau 1 est équipé de moyens de liaison représentés sous la référence générale 3 aux figures. Dans ce montage, les axes 3A de pivotement des panneaux sont parallèles entre eux d'un panneau à un autre et parallèles au plan P de référence. Dans les exemples représentés, ces axes 3A s'étendent perpendiculairement à l'axe longitudinal de la rangée formée par lesdits panneaux 1.

Dans les exemples représentés, les moyens 3 de liaison pour un montage à pivotement entre panneaux et structure support comprennent au moins un pilier 4, de préférence une paire de piliers 4, raccordés par l'une de leurs extrémités à la structure 2 support et équipés à, ou au voisinage de, leur extrémité opposée d'un pivot 5 interposé entre panneau 1 et pilier 4. Lesdits piliers 4, portés par la structure 2 support, s'étendent de préférence sensiblement parallèles entre eux et les axes 3A de pivotement de chaque pivot 5 entre panneau 1 et pilier 4 sont disposés de manière sensiblement parallèle d'un pilier 4 à un autre. Chaque panneau 1 peut donc indifféremment être soutenu par un ou plusieurs piliers 4 sans sortir du cadre de l'invention.

De manière caractéristique à l'invention, lesdits panneaux 1 sont en outre, à l'état couplé à la structure support, montés mobiles par rapport à ladite structure 2 support suivant une direction D orthogonale à l'axe de pivotement, dit axe Nord-Sud, des panneaux et parallèle au plan P de référence dans le sens d'un rapprochement ou d'un écartement desdits panneaux 1 entre eux pour le passage desdits panneaux 1 d'une position rapprochée en configuration coplanaire à une position écartée en configuration inclinée. Pour permettre de bien visualiser ce rapprochement ou cet écartement des panneaux lors du passage d'une configuration à une autre, il est possible de mesurer la distance entre axes 3A de deux panneaux adjacents d'une configuration à une autre. Ainsi, les bords de chaque panneau, parallèles à l'axe pivot des panneaux, étant écartés d'une distance 2R, et θ, de préférence compris en valeur absolue entre 0 et 45°, étant l'angle d'inclinaison desdits panneaux par rapport au plan P de référence, la distance entre les axes 3A pivot de deux panneaux adjacents croît lors du passage de la configuration coplanaire à la configuration inclinée et est comprise entre 2R et 2R+X avec X = 2R (1 - cos θ).

Lesdits panneaux 1 pivotants sont donc, en particulier par l'intermédiaire de leurs moyens de liaison à la structure 2 support, montés mobiles à coulissement par rapport à la structure 2 support et sont reliés à la structure 2 support par une liaison à coulissement pour permettre, via les moyens d'entraînement en déplacement en synchronisme desdits panneaux 1, un déplacement combiné en pivotement et en translation desdits panneaux par rapport à la structure 2 support. Il en résulte la possibilité de disposer d'une structure 2 support de conception simplifiée formée par exemple essentiellement d'une base affectant la forme d'un cadre comme l'illustrent les figures.

Dans les exemples représentés, pour un montage desdits panneaux 1 dans le sens d'un rapprochement ou d'un écartement desdits panneaux 1 entre eux, lesdits piliers 4 sont en outre, dans leur zone de raccordement à la structure 2 support reliés à ladite structure 2 support par une liaison 6 à coulissement le long de ladite structure 2 support.

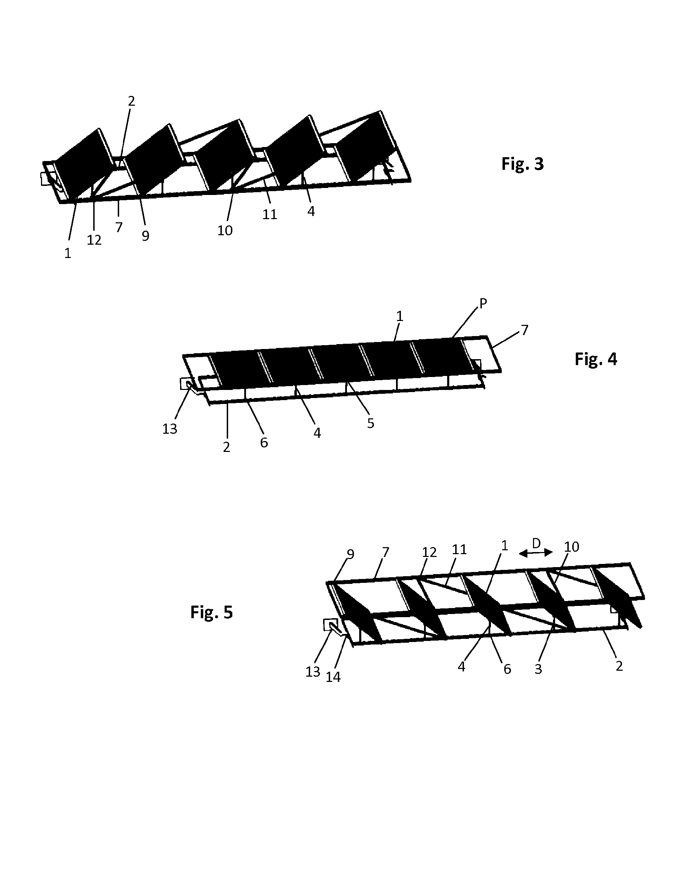

Le cadre ou base constitutif de la structure support 2 peut ainsi être équipé de glissières parallèles à l'axe longitudinal dudit cadre à l'intérieur desquelles coulisse l'extrémité dite inférieure des piliers. Ainsi, chaque panneau et ces moyens 3 de liaison à la structure 2 support forment un ensemble monté mobile axialement et, en particulier, déplaçable à coulissement le long de la structure 2 support par les moyens d'entraînement en déplacement en synchronisme desdits panneaux 1. Ce déplacement, combiné en translation et en pivotement des panneaux 1, par rapport à la structure 2 support, permet le passage desdits panneaux d'une position rapprochée en configuration coplanaire à une position écartée en configuration inclinée quel que soit le sens d'inclinaison desdits panneaux comme l'illustrent les figures 3 à 5.

Pour permettre un tel déplacement combiné des panneaux 1, les moyens d'entraînement en déplacement en synchronisme desdits panneaux 1 comprennent un organe 7, tel qu'un cadre, d'entraînement en déplacement des panneaux 1, ledit organe 7 d'entraînement en déplacement des panneaux 1 étant monté mobile, par rapport à la structure 2 support, dans le sens d'un rapprochement ou d'un écartement de ladite structure 2 support, par l'intermédiaire d'au moins un actionneur 8, tel qu'un vérin. Cet organe 7 d'entraînement en déplacement des panneaux 1 auquel lesdits panneaux 1 sont couplés par une liaison 9 à pivot glissant d'axe de pivotement parallèle à l'axe 3A de pivotement des moyens 3 de liaison à pivotement des panneaux 1 à la structure 2 support est en outre couplé auxdits panneaux par un jeu de biellettes 10, 11 à fonction d'écarteur.

Dans les exemples représentés, l'organe 7 d'entraînement en déplacement des panneaux 1 est formé par un simple cadre s'étendant sensiblement parallèlement au cadre de base constitutif de la structure support 2, ce cadre étant déplaçable, par l'intermédiaire d'au moins un actionneur 8, dans le sens d'un rapprochement ou d'un écartement du cadre de base de la structure 2 support, lesdits cadres étant maintenus simplement parallèles entre eux au cours de ces déplacements en va-et-vient dans le sens d'un rapprochement ou d'un écartement.

Pour faciliter un tel déplacement de l'organe 7 d'entraînement en déplacement des panneaux 1 par rapport à la structure 2 support, le dispositif comporte des moyens, tels que des glissières, de guidage en déplacement de l'organe 7 d'entraînement en déplacement des panneaux par rapport à la structure 2 support.

Généralement, chaque panneau 1 est couplé à l'organe 7 d'entraînement en déplacement des panneaux 1 par au moins deux biellettes 10, 11, chaque biellette 10, 11 d'un panneau 1 étant, dans sa zone de raccordement à l'organe 7 d'entraînement en déplacement desdits panneaux, couplée en outre à la biellette 10, 11 d'un autre panneau 1.

Dans les exemples représentés, chaque panneau 1 est couplé à l'organe 7 d'entraînement en déplacement des panneaux 1 par au moins deux paires de biellettes 10, 11, chaque biellette d'une paire d'un panneau étant, dans sa zone de raccordement à l'organe 7 d'entraînement en déplacement desdits panneaux, couplée en outre à la biellette d'un autre panneau.

Comme l'illustrent les figures, les biellettes 10, 11 d'un panneau disposées de part et d'autre du plan du panneau 1 sont de dimension différenciée, l'une 11 des biellettes présentant, de préférence, une longueur voisine du double de la longueur de l'autre biellette 10.

Chaque biellette 10, 11 d'un panneau 1 est, dans sa zone de raccordement à l'organe 7 d'entraînement en déplacement desdits panneaux 1, couplée audit organe 7 d'entraînement en déplacement des panneaux 1 par une liaison 12 à pivot glissant.

On entend à chaque fois par pivot glissant une liaison qui permet à la fois un déplacement relatif à pivotement et à coulissement ou en translation des éléments reliés entre eux par ladite liaison. Chaque biellette 10, 11 est donc reliée aux longerons du cadre constitutif de l'organe 7 d'entraînement en déplacement des panneaux 1 par un pivot monté mobile axialement le long dudit longeron. Il en est de même de chaque panneau dont l'un des bords est relié aux longerons du cadre constitutif de l'organe 7 d'entraînement en déplacement des panneaux 1 par une liaison 9 à pivot glissant tandis que le bord opposé dudit panneau 1 est relié aux biellettes 10, 11 par une liaison pivot d'axe pivot parallèle à l'axe 3A de pivotement des moyens 3 de liaison à pivotement des panneaux 1 à la structure 2 support. Lesdites biellettes 10, 11 forment ainsi, entre deux panneaux adjacents d'une rangée de panneaux 1, un compas, la liaison pivot desdites branches du compas étant disposée sur l'organe 7 d'entraînement en déplacement des panneaux 1, les extrémités libres des branches du compas étant chacune couplées par une liaison pivot à un panneau 1.

Grâce à cette disposition, l'organe 7 d'entraînement en déplacement desdits panneaux 1, monté mobile par rapport à la structure 2 support dans le sens d'un rapprochement ou d'un écartement de ladite structure 2 support par l'intermédiaire d'un actionneur 8, est, au cours de son entraînement en déplacement par rapport à la structure 2 support, apte à passer d'une position extrême de rapprochement de la structure 2 support dans laquelle les panneaux 1 sont inclinés suivant une première direction à une position extrême d'écartement de la structure 2 support dans laquelle les panneaux 1 sont inclinés suivant une seconde direction opposée à la première direction en passant par une position intermédiaire dans laquelle lesdits panneaux 1 sont coplanaires. Ces trois positions sont illustrées aux figures 3 à 5. Pour permettre le passage d'une configuration à une autre, un seul actionneur ou un couple d'actionneurs suffit. Bien évidemment, le ou les actionneurs sont reliés à une unité de pilotage pour un déplacement des actionneurs en fonction de paramètres tels que la saison, l'heure dans la journée, etc. et ce de manière en soi bien connue.

Pour parfaire le dispositif, le dispositif est équipé d'une structure 13 de liaison pour le raccordement de la structure 2 support à la construction 20 à équiper, ladite structure 2 support étant reliée à la structure 13 de liaison par une liaison 14 pivot d'axe pivot transversal, de préférence orthogonal, à l'axe 3A pivot dit axe Nord-Sud des moyens 3 de liaison à pivotement desdits panneaux 1 à la structure 2 support.

Dans les exemples représentés, la structure 13 de liaison est formée simplement de deux bras parallèles couplables, à l'une de leurs extrémités, à la construction 20 à équiper et couplés à leur autre extrémité, par une liaison pivot, à la structure 2 support. Le déplacement à pivotement de la structure 2 support par rapport à la structure 13 de liaison peut être obtenu par l'intermédiaire d'au moins un actionneur, tel qu'un vérin 8, piloté par une unité de pilotage commune à l'unité de pilotage des actionneurs de la structure 2 support. Grâce à la présence de ces deux structures, les panneaux tendent donc, au cours de la journée, d'une part à suivre le déplacement du soleil d'Est en Ouest, d'autre part à suivre l'élévation du soleil au cours de la journée. Il en résulte un positionnement optimal des surfaces desdits panneaux par rapport au rayonnement solaire, ces déplacements combinés étant obtenus avec un nombre réduit d'actionneurs linéaires, de préférence du genre vérin.

## Revendications

1. Dispositif de poursuite du soleil, destiné notamment à équiper une construction (20), le dispositif de poursuite du soleil comprenant au moins deux panneaux (1), de préférence solaires, une structure (2) support à laquelle lesdits panneaux (1) sont couplés et des moyens d'entraînement en déplacement en synchronisme desdits panneaux (1) pour le passage desdits panneaux (1) d'une configuration coplanaire dans laquelle lesdits panneaux (1) sont disposés côte à côte dans un même plan, dit plan (P) de référence, à une configuration inclinée par rapport audit plan (P) de référence, dans laquelle lesdits panneaux (1) s'étendent, de préférence, de manière parallèle entre eux, chaque panneau (1) étant, pour le passage d'une configuration à une autre, équipé de moyens (3) de liaison à la structure (2) support, pour un montage à pivotement autour d'un axe (3A), dit axe nord sud, lesdits axes (3A) de pivotement desdits panneaux étant parallèles entre eux d'un panneau à un autre,
**caractérisé en ce que** lesdits panneaux (1) sont en outre, à l'état couplé à la structure support, montés mobiles par rapport à ladite structure (2) support suivant une direction (D), orthogonale à l'axe de pivotement, dit axe Nord-Sud desdits panneaux (1), et parallèle au plan (P) de référence, dans le sens d'un rapprochement ou d'un écartement desdits panneaux (1) entre eux, pour le passage desdits panneaux (1) entre une position rapprochée en configuration coplanaire et une position écartée en configuration inclinée.

2. Dispositif selon la revendication 1,
**caractérisé en ce que** les moyens (3) de liaison pour un montage à pivotement entre panneau (1) et structure (2) support comprennent au moins un pilier (4) raccordé par l'une de ses extrémités à la structure (2) support et équipé à, ou au voisinage de, son extrémité opposée, d'un pivot (5) interposé entre panneau (1) et pilier (4), lesdits piliers (4) portés par la structure (2) support s'étendant, de préférence, sensiblement parallèles entre eux et les axes de pivotement de la liaison pivot (5) panneau (1)/pilier (4) étant disposés, de manière sensiblement parallèle, d'un pilier à un autre.

3. Dispositif selon la revendication 2,
**caractérisé en ce que**, pour un montage desdits panneaux (1) dans le sens d'un rapprochement ou d'un écartement desdits panneaux (1) entre eux, lesdits piliers (4) sont en outre, dans leur zone de raccordement à la structure (2) support reliés à ladite structure (2) support par une liaison (6) à coulissement le long de ladite structure (2) support.

4. Dispositif selon l'une des revendications 1 à 3,
**caractérisé en ce que** les moyens d'entraînement en déplacement en synchronisme desdits panneaux (1) comprennent un organe (7), tel qu'un cadre, d'entraînement en déplacement des panneaux (1), ledit organe (7) d'entraînement en déplacement des panneaux (1) étant monté mobile, par rapport à la structure (2) support, dans le sens d'un rapprochement ou d'un écartement de ladite structure (2) support, par l'intermédiaire d'au moins un actionneur (8), tel qu'un vérin, ledit organe (7) d'entraînement en déplacement des panneaux (1) auquel lesdits panneaux (1) sont couplés par une liaison (9) à pivot glissant d'axe de pivotement parallèle à l'axe (3A) de pivotement des moyens (3) de liaison à pivotement des panneaux (1) à la structure (2) support étant en outre couplé auxdits panneaux par un jeu de biellettes (10, 11) à fonction d'écarteur.

5. Dispositif selon la revendication 4,
**caractérisé en ce que** chaque panneau (1) est couplé à l'organe (7) d'entraînement en déplacement des panneaux (1) par au moins deux biellettes (10, 11), chaque biellette (10, 11) d'un panneau (1) étant, dans sa zone de raccordement à l'organe (7) d'entraînement en déplacement desdits panneaux, couplée en outre à la biellette (10, 11) d'un autre panneau (1).

6. Dispositif selon la revendication 5,
**caractérisé en ce que** les biellettes (10, 11) d'un panneau disposées de part et d'autre du plan du panneau (1) sont de dimension différenciée, l'une (11) des biellettes présentant, de préférence, une longueur voisine du double de la longueur de l'autre biellette (10).

7. Dispositif selon l'une des revendications 4 à 6,
**caractérisé en ce que** chaque biellette (10, 11) d'un panneau (1) est, dans sa zone de raccordement à l'organe (7) d'entraînement en déplacement desdits panneaux (1), couplée audit organe (7) d'entraînement en déplacement des panneaux (1) par une liaison (12) à pivot glissant.

8. Dispositif selon l'une des revendications 4 à 7,
**caractérisé en ce que** l'organe (7) d'entraînement en déplacement desdits panneaux (1), monté mobile par rapport à la structure (2) support dans le sens d'un rapprochement ou d'un écartement de ladite structure (2) support par l'intermédiaire d'un actionneur (8), est, au cours de son entraînement en déplacement par rapport à la structure (2) support, apte à passer d'une position extrême de rapprochement de la structure (2) support dans laquelle les panneaux (1) sont inclinés suivant une première direction à une position extrême d'écartement de la structure (2) support dans laquelle les panneaux (1) sont inclinés suivant une seconde direction opposée à la première direction en passant par une position intermédiaire dans laquelle lesdits panneaux (1) sont coplanaires.

9. Dispositif selon l'une des revendications 4 à 8,
**caractérisé en ce que** le dispositif comporte des moyens, tels que des glissières, de guidage en déplacement de l'organe (7) d'entraînement en déplacement des panneaux par rapport à la structure (7) support.

10. Dispositif selon l'une des revendications 1 à 9,
**caractérisé en ce que** le dispositif est équipé d'une structure (13) de liaison pour le raccordement de la structure (2) support à la construction (20) à équiper, ladite structure (2) support étant reliée à la structure (13) de liaison par une liaison (14) pivot d'axe pivot transversal, de préférence orthogonal, à l'axe (3A) pivot dit axe Nord-Sud des moyens (3) de liaison à pivotement desdits panneaux (1) à la structure (2) support.
